# EUROPEAN PATENT SPECIFICATION

(11) **EP 2 952 239 B1**
(45) Date of publication and mention of the grant of the patent: **22.04.2020**
(21) Application number: 15153984.8
(22) Date of filing: 05.02.2015
(51) Int. Cl.: B01D 29/64

(54) **Reverse rinsing filter**
Rückspülfilter
Filtre de lavage à contre-courant

(30) Priority: 06.06.2014 EP 14171572
(43) Date of publication of application: 09.12.2015
(73) Proprietor: Honeywell Technologies Sarl, 1180 Rolle (CH)
(72) Inventor: Haltmar, Bretislav, 664 57 Menin (CZ)
(74) Representative: Sturm, Christoph

(56) References cited:
- EP-A2- 0 018 527
- FR-A1- 2 677 265
- US-A- 5 830 347

## Description

The present patent application relates to a reverse rinsing filter.

A reverse rinsing filter according to the prior art is known from the product leaflet "F76S-F, Reverse rinsing fine filter with flanges, ENOH-1117GE23 R0808 Honey-well GmbH, year 2008". The reverse rinsing filter disclosed in this product leaflet comprises a housing. The housing provides an inlet opening being in communication with an inlet chamber for liquid medium, especially for potable water, to be filtered and an outlet opening being in communication with an outlet chamber for filtered liquid medium. The housing further provides a discharge opening being in communication with a discharge chamber, wherein in a so-called filtration mode of the reverse rinsing filter said discharge opening is closed by a discharge valve, and wherein in a so-called reverse rinsing mode of the reverse rinsing filter said discharge opening is opened by the discharge valve. The reverse rinsing mode is also often called backwashing mode. A filter insert is positioned within the housing. The filter insert comprises a filter sieve and an impeller. The filter sieve comprises a lower filter sieve section and an upper filter sieve section. In the filtration mode of the reverse rinsing filter, when the discharge valve is closed, the filter insert is in a first relative position within the housing such that the upper filter sieve section is blocked and the lower filter sieve section is unblocked so that the lower filter sieve section can filter liquid medium that flows from the inlet chamber through the lower filter sieve section into the filter insert and from the filter insert into the outlet chamber. In the reverse rinsing mode of the reverse rinsing filter, when the discharge valve is opened, the filter insert is in a second relative position within the housing such that the upper filter sieve section and the lower filter sieve section are both unblocked so that liquid medium flows from the inlet chamber through the upper filter sieve section into the filter insert and then from the filter insert through the lower filter sieve section into the discharge chamber.

During the filtration mode and during the reverse rinsing mode of the reverse rinsing filter known from the prior art, the water flows through the impeller positioned inside the filter sieve. During the reverse rinsing mode the rotation of the impeller is used to provide backwashing of the lower section of the filter sieve.

EP 0 018 527 A2 and FR 2 677 265 A1 disclose other prior art reverse rinsing filters.

Against this background, a novel reverse rinsing filter is provided.

The reverse rinsing filter according to the invention is defined in the claim 1.

This design of the sieve and the valve provides several advantages. First, the flap valve seals better during the reverse rinsing mode than valves used in the prior art because of the higher differential pressure acting on the flap valve. Better sealing of the valve results in higher differential pressure in nozzles of the tube impeller which results in more effective cleaning of the lower filter sieve section during the reverse rinsing mode. Second, the flap is oscillating in the flow of the filtered medium during the filtration mode. This oscillation causes a cleaning effect for the upper filter sieve section of the filter sieve at the time when the same is not used, namely during the filtration mode. The flap oscillating in the upper sub-chamber during the filtration mode prevents the deposition of dirt particles in the upper filter sieve section of the filter sieve. Third, the flap valve doesn't stuck by opening or closing because of its flexibility.

According to a preferred embodiment, each outer tube of the impeller comprises at least one deflector element positioned in the region of the nozzles of the respective outer tube. In the reverse rinsing mode of the reverse rinsing filter more effective backwashing of the lower section of the filter sieve can be provided.

Preferred developments of the invention are provided by the dependent claims and the description which follows. Exemplary embodiments are explained in more detail on the basis of the drawing, in which:
- Figure 1: shows a cross section through a reverse rinsing filter according to the present application in a filtration mode of the reverse rinsing filter;
- Figure 2: shows a cross section through the reverse rinsing filter according to the present application in a reverse rinsing mode of the reverse rinsing filter;
- Figure 3a: shows a filter insert of the reverse rinsing filter according to Figures 1 and 2 in the reverse rinsing mode of the reverse rinsing filter;
- Figure 3b: shows a detail of the filter insert shown in Figure 3a;
- Figure 4a: shows the filter insert of Figure 3a in the filtration mode of the reverse rinsing filter;
- Figure 4b: shows a detail of the filter insert shown in Figure 4a;
- Figure 5a and 5b: show different views of a filter sieve of the filter insert of the reverse rinsing filter;
- Figure 6a and 6b: show different views of a valve of the filter insert of the reverse rinsing filter;
- Figure 7a to 7d: show different views of the impeller of the reverse rinsing filter according to Figures 1 and 2;
- Figure 8a to 8d: show different views of a first alternative impeller; and
- Figure 9a to 9d: show different views of a second alternative impeller.

The present application relates to a reverse rinsing filter 10. The reverse rinsing filter 10 according to the present application is preferably used for the filtration of potable water.

The reverse rinsing filter 10 comprises a housing 11, wherein the housing 11 provides an inlet chamber 12 for liquid medium to be filtered and an outlet chamber 13 for filtered liquid medium.

The housing 11 comprises an upper connection section 11a and a lower filter-bowl section 11b.

The inlet chamber 12 of the housing 11 of the reverse rinsing filter 10 is in communication with an inlet opening 14 of the housing 11 and the outlet chamber 13 of the housing 11 of the reverse rinsing filter 10 is in communication with an outlet opening 15 of the housing 11.

The inlet opening 14 is provided in the region of an inlet flange 16 and the outlet opening 15 is provided in the region of an outlet flange 17 of the connection section 11a of the housing 11. The reverse rinsing filter 10 is connectable to an inlet pipe through said inlet flange 16 and to an outlet pipe through said inlet flange 17.

The housing 11 of reverse rinsing filter 10 provides further a discharge chamber 18 being in communication with a discharge opening 19. A discharge valve 20 is assigned to the discharge opening 19.

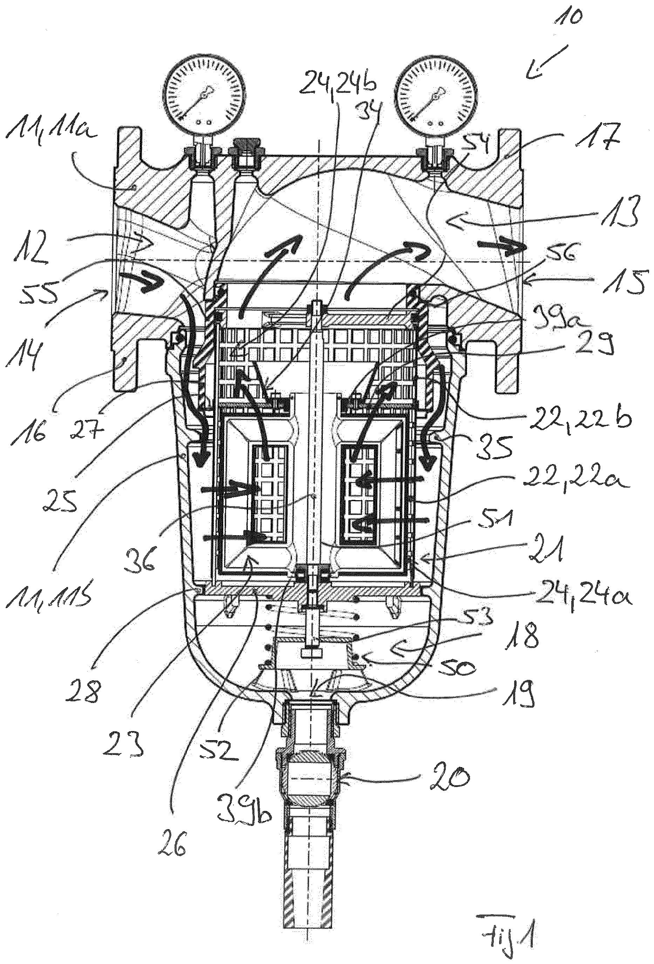

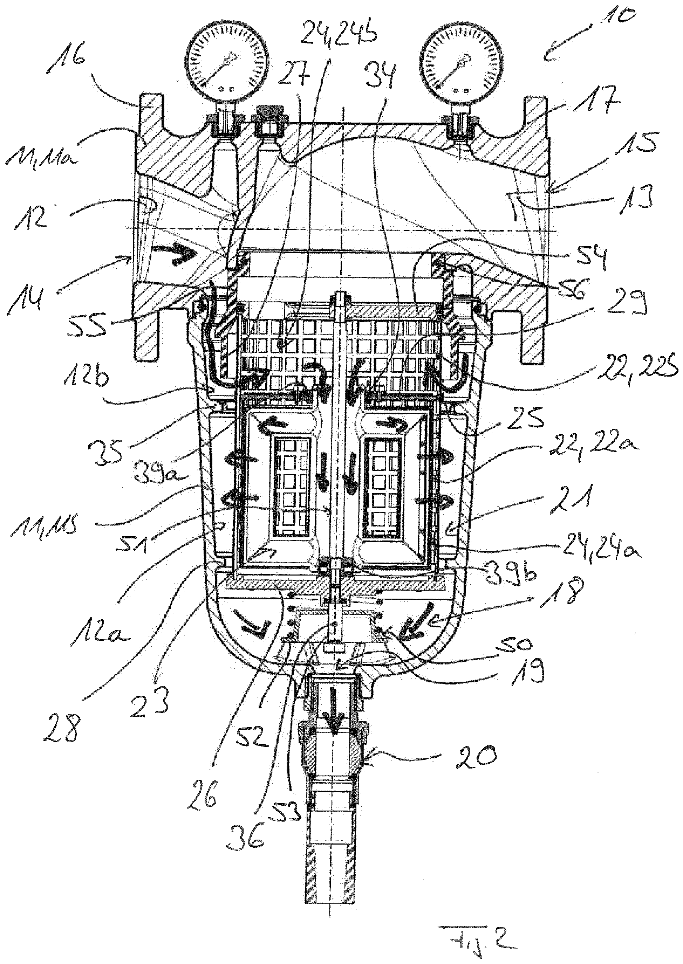

In a so-called filtration mode of the reverse rinsing filter 10 (see Figure 1) said discharge opening 19 is closed by a discharge valve 20 assigned to the discharge opening 19. In a so-called reverse rinsing mode of the reverse rinsing filter 10 (see Figure 2) said discharge opening 19 is opened by the discharge valve 20.

The reverse rinsing filter 10 comprises a filter insert 21. The filter insert 21 is positioned within the housing 11, wherein the filter insert 21 comprises a filter sieve 22 with a lower filter sieve section 22a and with an upper filter sieve section 22b.

The filter insert 21 further comprises an impeller 23 positioned within an interior chamber 24 of the filter insert 21.

In the so-called filtration mode of the reverse rinsing filter 10 (see Figure 1), with the discharge valve 20 being closed, the filter insert 21 is in a first relative position within the housing 11. In said first relative position of the filter insert 21 within the housing 11 the upper filter sieve section 22b is blocked and the lower filter sieve section 22a is unblocked.

In said first relative position of the filter insert 21 within the housing 11 the lower filter sieve section 22a can filter liquid medium that flows from the inlet chamber 12 through the lower filter sieve section 22a into the interior chamber 24 of the filter insert 21. Said filtered liquid medium then flows from the interior chamber 24 of the filter insert 21 into the outlet chamber 13.

In the so-called reverse rinsing mode of the reverse rinsing filter 10 (see Figure 2), with the discharge valve 20 being opened, the filter insert 21 is in a second relative position within the housing 11. In said second relative position of the filter insert 21 within the housing 11 the upper filter sieve section 22b and the lower filter sieve section 22a are both unblocked.

In said second relative position of the filter insert 21 within the housing 11 liquid medium flows from the inlet chamber 12 through the upper filter sieve section 22b into the interior chamber 24 of the filter insert 21 and from the interior chamber 24 of the filter insert 21 through the lower filter sieve section 22a back into inlet chamber 12, and then from the inlet chamber 12 into the discharge chamber 18.

An upper protrusion 25 extends radially outward from the filter insert 21, namely from a section of the filter sieve 22 being positioned between the upper filter sieve section 22b and the lower filter sieve section 22a.

A bottom wall 26 of the filter insert 21 delimits the interior chamber 24 of the filter insert 21.

In the so-called filtration mode of the reverse rinsing filter 10 (see Figure 1), said upper protrusion 25 of the filter insert 21 is in contact with an inner wall section 27 of the housing 11 thereby blocking the upper filter sieve section 22b.

Further on, in the so-called filtration mode of the reverse rinsing filter 10 (see Figure 1), the bottom wall 26 of the filter insert 21 is in contact with a lower radial inwardly extending protrusion 28 of an outer wall section of the housing 11 thereby separating the inlet chamber 12 from the discharge chamber 18.

As explained above, in the so-called filtration mode of the reverse rinsing filter 10 liquid medium to be filtered flows from the inlet chamber 12 through the lower filter sieve section 22a into the interior chamber 24 of the filter insert 21, and then said filtered liquid medium flows from the interior chamber 24 of the filter insert 21 into the outlet chamber 13.

In the so-called reserve rinsing mode of the reverse rinsing filter 10 (see Figure 2), said upper protrusion 25 of the filter insert 21 is in contact with an upper radial inwardly extending protrusion 35 of the outer wall section of the housing 11 thereby unblocking the upper filter sieve section 22b and thereby dividing the inlet chamber 12 into two sub-chambers 12a, 12b, namely a lower sub-chamber 12a and an upper sub-chamber 12b.

Further on, in the so-called reserve rinsing mode of the reverse rinsing filter 10 (see Figure 1), the bottom wall 26 of the filter insert 21 is not in contact with the radial inwardly extending protrusion 28 of an outer wall section of the housing 11 thereby connecting the inlet chamber 12, namely the lower sub-chamber 12a of the same, and the discharge chamber 18.

As explained above, in the so-called reserve rinsing mode of the reverse rinsing filter 10 liquid medium flows from the inlet camber 12, namely from the upper sub-chamber 12b of the same, through the upper filter sieve section 22b into the interior camber 24 of the filter insert 21, and then from the interior chamber 24 of the filter insert 21 through the lower filter sieve section 22a back into inlet chamber 12, namely into the lower sub-chamber 12a of the same, and then from the lower sub-chamber 12a of the inlet chamber 12 into the discharge chamber 18.

Liquid medium flows through the upper filter sieve section 22b only in the reverse rinsing mode of the reverse rinsing filter 10.

Liquid medium flows through the lower filter sieve section 22a in the filtering mode and in the reverse rinsing mode of the reverse ringing filter 10, namely in opposite directions.

In the filtering mode liquid medium passes through the lower filter sieve section 22a radial inwardly from the inlet chamber 12 into the interior chamber 24. In the reserve rinsing mode liquid medium passes through the lower filter sieve section 22a radial outwardly from the interior chamber 24 into the inlet chamber 12, namely into the lower sub-chamber 12a of the inlet chamber 12.

The filter insert 21 comprises a dividing wall 29. The diving wall 29 separates the interior chamber 24 of the filter insert 21 into an upper sub-chamber 24b and a lower sub-chamber 24a. The upper sub-chamber 24b of the interior chamber 24 is in the reverse rinsing mode in communication with the inlet chamber 12 through the upper filter sieve section 22b. The lower sub-chamber 24a of the interior chamber 24 is in the reversing rinsing mode as well as in the filtering mode in communication with the inlet chamber 12 through the lower filter sieve section 22a.

The impeller 23 is positioned inside the lower sub-chamber 24b of the interior chamber 24.

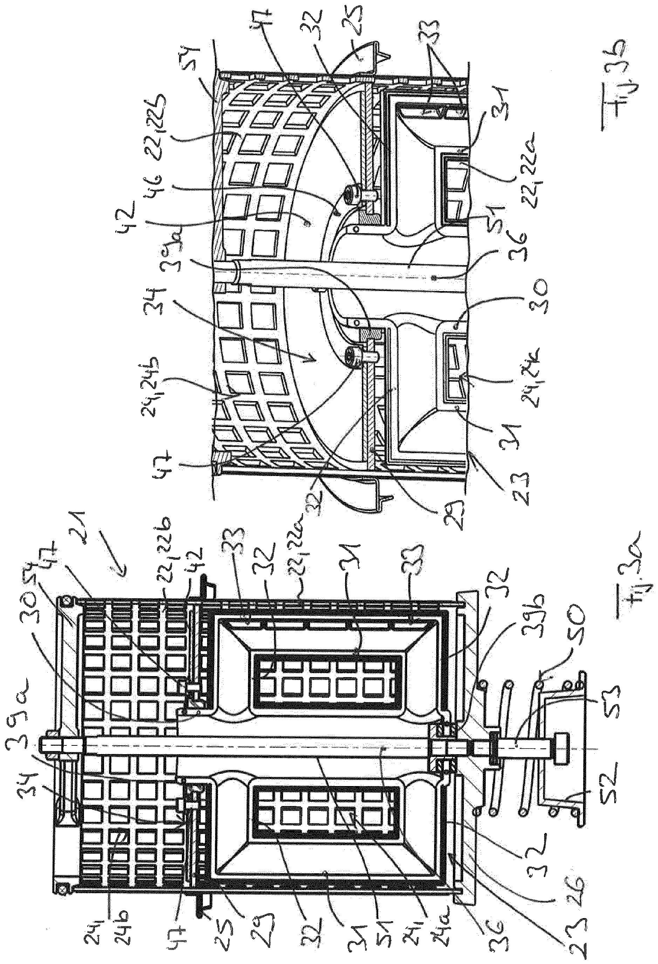

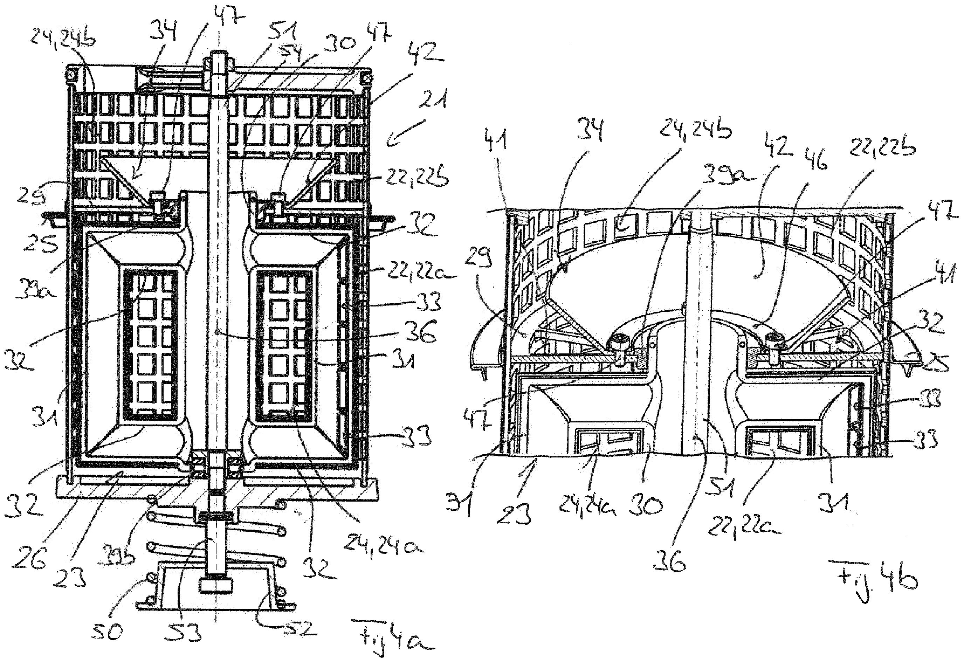

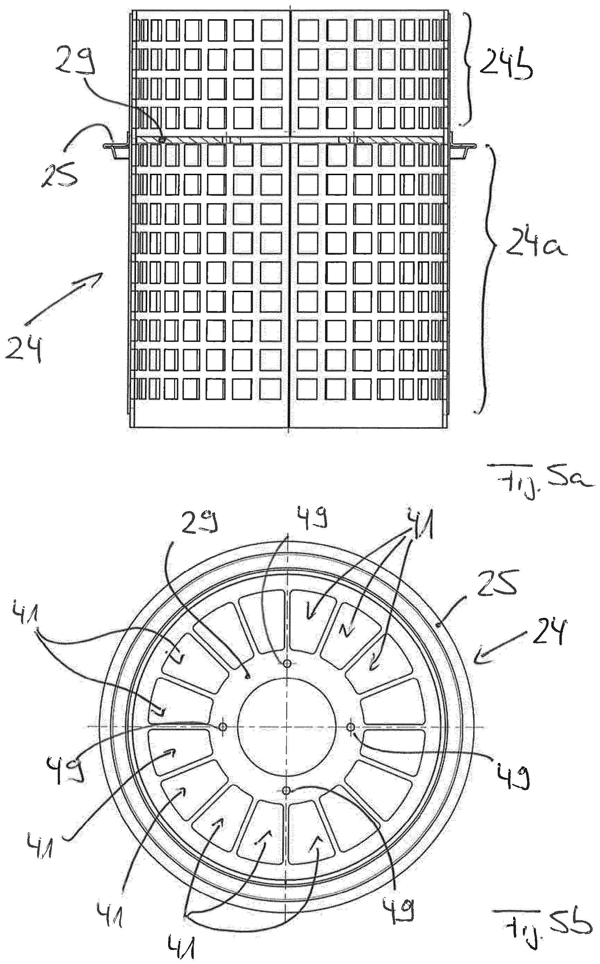

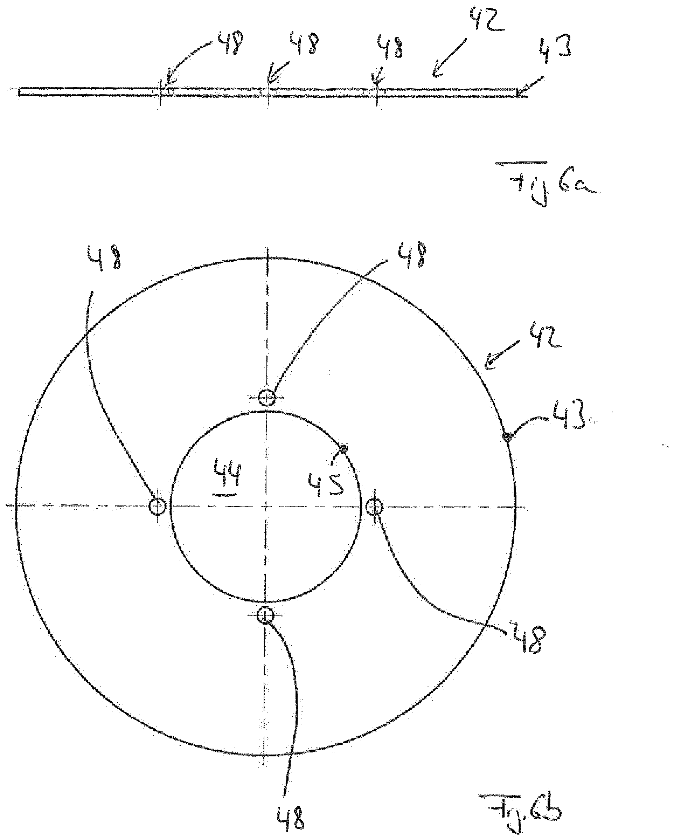

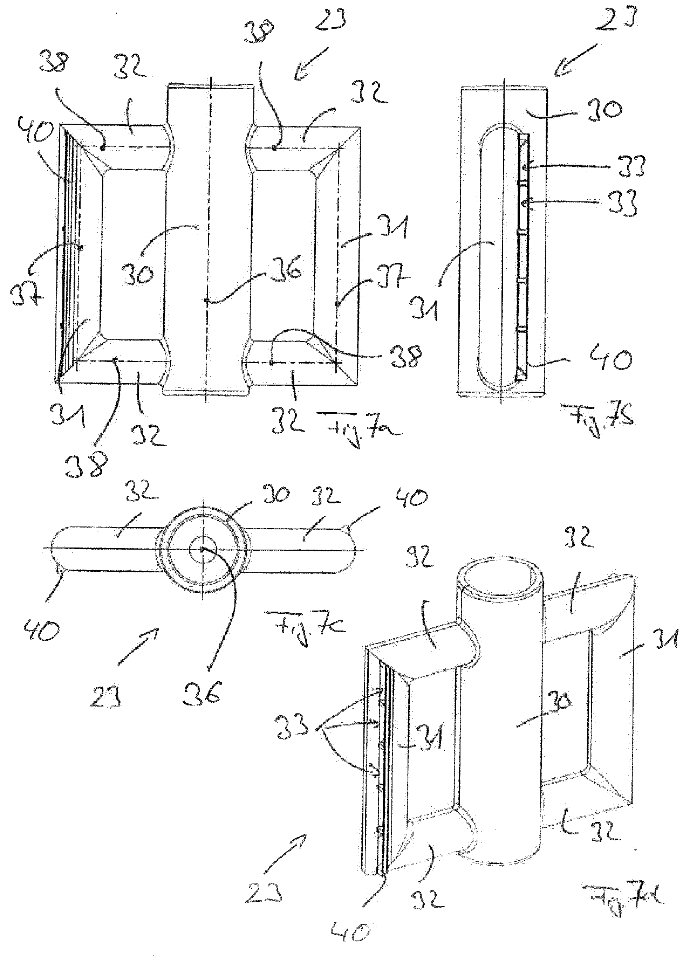

The impeller 23 of the filter insert 21 comprises a central tube 30 and at least one outer tube 31 running preferably parallel to said central tube 30. In the embodiment shown in Figure 1 to Figure 7d, the impeller 23 comprises one central tube 30 and two outer tubes 31 running parallel to said central tube 30.

The central tube 30 of the impeller 23 is in communication with the upper sub-chamber 24b of the interior chamber 24. Further on, the central tube 30 of the impeller 23 is in communication with each outer tube 31, namely through at least one connecting tube 32 of the impeller 23 extending between the central tube 30 and the respective outer tube 31. In the embodiment shown in Figure 1 to Figure 7d, two connecting tubes 32 are running between the central tube 30 and each of the two outer tubes 31. The connecting tubes 32 run perpendicular to the central tube 30 and the outer tubes 31. Each outer tube 31 comprises nozzles 33.

The filter insert 21 comprises a valve 34 assigned to said dividing wall 29.

In the so-called filtration mode of the reverse rinsing filter 10 (see Figure 1) said valve 34 is opened thereby allowing the liquid medium flowing though the lower filter sieve section 22a into lower sub-chamber 24a of the interior chamber 24 and flowing around the tubes 30, 31, 22 of the impeller 23 to flow from the lower sub-chamber 24a of the interior chamber 24 into the upper sub-chamber 24b of the same.

In the so-called reverse rinsing mode of the reverse rinsing filter 10 (see Figure 2) said valve 34 is closed thereby allowing the liquid medium flowing through the upper filter sieve section 21b into the upper sub-chamber 24b of the interior chamber 24 to flow from the upper sub-chamber 24b of the interior chamber 24 into the central tube 30 of the impeller 23, then through the or each connecting tube 32 of the impeller 23, then through the or each outer tube 31 of the impeller 23 and through the nozzles 33 of each of the outer tubes 31 of the impeller 23 to the lower filter sieve section 22a.

The dividing wall 29 which separates the interior chamber 24 of the filter insert 21 into the upper sub-chamber 24b and the lower sub-chamber 24a runs in radial direction of the filter insert 21. The dividing wall 29 comprises openings 41, wherein in the filtration mode of the reverse rinsing filter 10 said openings 41 of the dividing wall 29 are opened by the valve 34 and wherein in the reverse rinsing mode of the reverse rinsing filter 10 said openings 41 of the dividing wall 29 are closed by the valve 34. The valve 34 is provided by a flap valve having a flap 42 made from an elastomer material, wherein in the reverse rinsing mode of the reverse rinsing filter 10 the flap 42 of said flap valve 34 runs parallel to the dividing wall 29 thereby covering or closing the openings 41 of the dividing wall 29, and wherein in the filtration mode of the reverse rinsing filter 10 the flap 42 of said flap valve 34 is lifted up from the dividing wall 29 thereby uncovering or opening the openings 41 of the dividing wall 29. The flap 42 of the flap valve 34 oscillates in the flow of filtered liquid medium during the filtration mode of the reverse rinsing filter 10. During the reverse rinsing mode of the reverse rinsing filter 10 the closed flap valve 10 directs the liquid medium through the tube impeller 23.

The flap 42 of the flap valve 34 is provided by a disc-shaped workpiece made from an elastomer material like rubber. Preferably, the flap valve 34 is a rubber flap valve.

The flap 42 of the flap valve 34 comprises a radial outer circular edge 43 and a radial inner opening 44 with a radial inner circular edge 45, wherein the central tube 30, namely an upper section of the same, of the impeller 23 passes though said opening 44 of the flap 42.

The flap 42 of the flap valve 34 is mounted to the dividing wall 29 by an annular fixing ring 46 and mounting elements 47, namely to a side of the dividing wall 29 facing towards the upper sub-chamber 24b of the interior chamber 24 of the filter insert 21 so that the in the filtration mode of the reverse rinsing filter 10 said flap 42 oscillates in the flow of filtered liquid medium within the upper sub-chamber 24b of the interior chamber 24. The mounting elements 47 pass though mounting openings 48 of the flap 42 and though mounting openings 49 of the dividing wall 29.

This above concept of a reverse rinsing filter 10 provides a new and more effective backwashing of the filter sieve 21. The impeller 23 makes use of a tube design. The impeller 23 is provided with nozzles 33 which are placed on the outer tubes 31 of the impeller 23 which are connected to the central tube 30 of the same. The impeller 23 is placed inside of the filter sieve 21, namely within the lower sub-chamber 24a of the interior chamber 24 of the filter sieve 21, and cleans the filter sieve 21, namely the lower filter sieve section 21b of the same, from inside to outside. The dividing wall 29 separating the interior chamber 24 in the upper sub-chamber 24b and the lower sub-chamber 24a is equipped with the valve 34. This valve 34 is opened during filtration and closed during reverse rinsing to direct the liquid medium through the tubes 30, 31, 32 of the impeller 23.

In the filtration mode the filtered liquid medium does not flow through the impeller 23 but just around the same and through a valve 34 which is above the impeller 23. The valve 23 works as a check valve and it is opened just by filtration if liquid medium is flowing.

The flap 42 of the flap valve 34 is oscillating in the flow of the filtered medium during the filtration mode. This oscillation causes a cleaning effect for the upper filter sieve section 22b of the filter sieve 22 at the time when the same is not used, namely during the filtration mode. The flap 42 oscillating in the upper sub-chamber 24b during the filtration mode prevents the deposition of dirt particles in the upper filter sieve section 22b of the filter sieve 22.

In the reverse rinsing mode the valve 34 above the impeller 23 is closed due to reversely flowing liquid medium. The liquid medium flows through the impeller 23, nozzles 33 and filter sieve 22 out of the filter insert 21. Liquid medium flowing through the nozzles 33 on the outer tubes 31 of the impeller 23 spin or rotate the impeller 23 reliably and effectively. The Filter sieve 21, namely the lower filter sieve section 22a, is cleaned by the spinning nozzles 33 which reversely wash the lower filter sieve section 22a.

In the reverse rinsing mode of the reverse rinsing filter 10 the central tube 30 of the impeller 23 and thereby the entire impeller 23 rotates around the longitudinal axis 36 of the filter insert 21, wherein the axis 37 of the or each outer tube 31 of the impeller 23 runs parallel to said longitudinal axis 36 of the filter insert 21.

During the reverse rinsing mode the flap valve 34 provides an improved sealing compared with valves used in the prior art because of the higher differential pressure acting on the flap valve 34. Better sealing of the valve 34 results in higher differential pressure in nozzles 33 of the impeller 23 which results in more effective cleaning of the lower filter sieve section 22a during the reverse rinsing mode.

The flap 42 of the flap valve 34 doesn't stuck by opening or closing because of the flexibility of the elastomer material from which the flap 42 is made.

Filtered liquid medium does not flow through the impeller 23 during the filtration mode of the reverse rinsing filter 10 although the flap valve 34 is integrated in the filter sieve 21. This provides a higher flow rate of filtered liquid medium during the filtration mode of the reverse rinsing filter 10 because the flow is not reduced by design of the impeller 23.

The thin, disc-shaped design of the flap 42 or flap valve 34 allows a shorter design of the sieve insert 21, thereby a shorter design of the reverse rinsing filter 10 and thereby reduced weight of the reverse rinsing filter 10.

The axis 38 of the or each connecting tube 32 of the impeller 23 runs perpendicular to the axis 36, 37 of the central tube 30 and the respective outer tube 31.

The impeller 23, namely the central tube 30 of the impeller 23, is guided by bearing 39a and 39b, namely by an upper bearing 39a and a lower bearings 39b. This improves the reliable and effective rotation of the impeller 23 and thereby the backwashing of the lower filter sieve section 21a.

The upper bearings 39a is mounted to the dividing wall 29 and positioned between the central tube 30 of the impeller 23 and the fixing ring 46 of the flap valve 34, namely between the upper section of the central tube 32 passing through the opening 44 of the flap 42 and the fixing ring 46.

The lower bearing 39b is positioned close to the bottom wall 26 of the filter insert 21, wherein said bottom wall 26 carries the filter sieve 22 and the tube impeller 23 on the upper side of the same. On the lower side of said bottom wall 26 of the filter insert 21 there is positioned a return spring 50. The return spring 50 tends to press the filter insert 21 in the first relative position within the housing 11 which is the filtration mode position of the filter insert 21. When the discharge valve 20 is opened, the filter insert 21 is moved into the second relative position, namely the reverse rinsing position, within the housing 11 against the spring force of said return spring 50. The filter insert 21 automatically returns back to the first relative position within the housing 11 when the discharge valve 20 is closed again.

A mounting rod 51 of the filter insert 21 extends in longitudinal direction of the same, namely in direction of the axis 36, wherein said mounting rod 51 extends through the bottom wall 26 of the filter insert 21.

The mounting rod 51 carries the lower bearings 39b so that the impeller 23 can rotate around the mounting rod 51. A screw 53 acting together with the mounting rod 51 carries a spring cup 52 of the return spring 50, wherein the return spring 50 acts with one end on the spring cup 52 and with the opposite end on the bottom wall 26.

Opposite to the bottom wall 26 of the filter insert 21 the filter insert 21 comprises an upper centering element 54 carried by the mounting rod 51 and acting together with an inner wall section 55 of the housing 11 being positioned above the inner wall section 27 of the housing 11. The centering element 54 guides the filter insert in the upper region of the housing 11. The wall sections 27, 55 are provided by a monolithic inner guiding section of the housing 11 which is mounted in the connection section 11a of the housing 11 via a pressed O-ring 56.

The impeller 23, namely the or each outer tube 31 of the impeller 23, is provided with at least one deflector element 40. The or each deflector element 40 is positioned in the region of the nozzles 33 of the respective outer tube 31, namely on the outer wall of the respective outer tube 31 adjacent to the nozzles 33 of the respective outer tube 31. Such deflector elements 40 further improve the reliable and effective rotation of the impeller 23 and thereby the backwashing of the lower filter sieve section 21a.

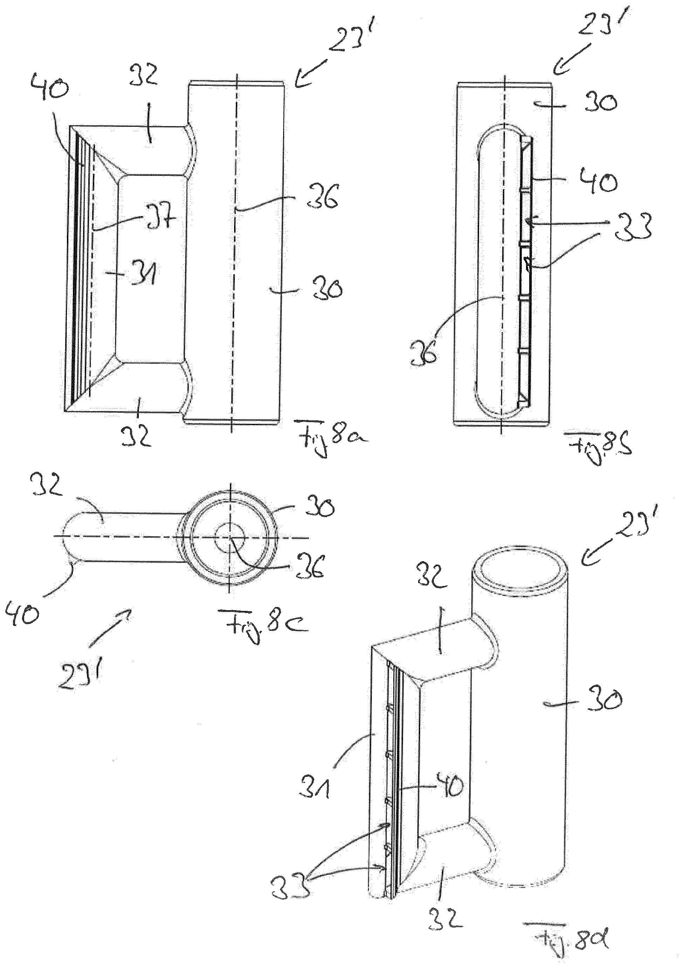

Figures 8a to 8d show an alternative impeller 23' for the reverse rinsing filter 10 shown in Figures 1 and 2. The impeller 23' comprises only one outer tube 31 being in communication with the central tube 30 through two connecting tubes 32. This impeller design has the advantages of a reduced consumption of liquid medium for cleaning of the filter sieve 21 and of a reduced weight and cost of the impeller 23'.

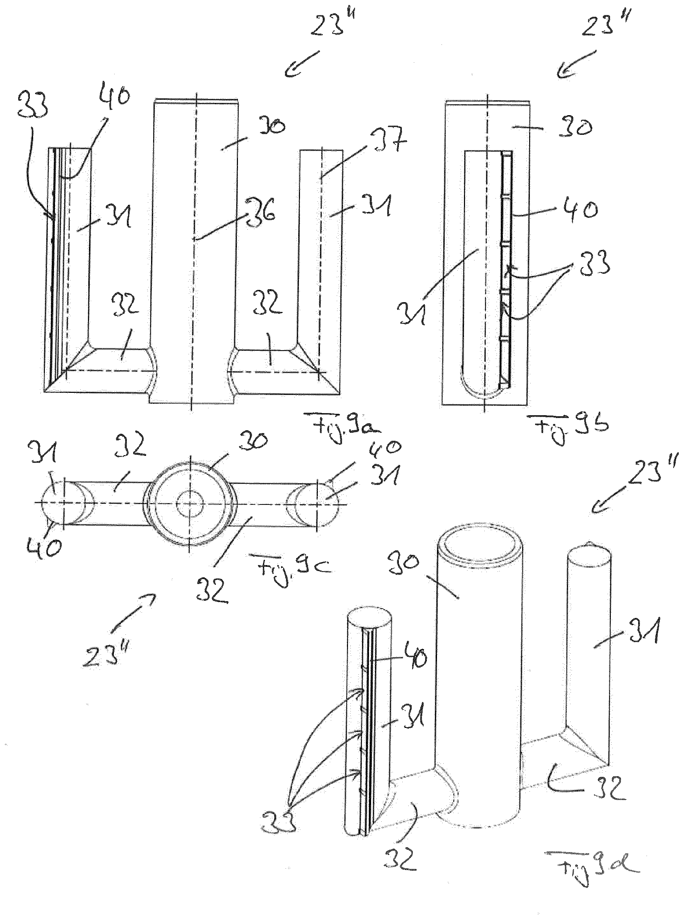

Figures 9a to 9d show another alternative impeller 23" for the reverse rinsing filter 10 shown in Figures 1 and 2. The impeller 23" comprises two outer tubes 31 each being in communication with the central tube 30 through one connecting tube 32. The connecting tubes 32 connect the outer tubes 31 with the central tube 30 at the lower ends of the same. At the opposite upper ends the outer tubes 31 are closed.

As mentioned above, during the filtration mode of the reverse rinsing filter 10 the filtered liquid does not flow through the tube impeller 23. This provides a higher flow rate.

It is not necessary to rotate a huge amount of liquid medium inside of the impeller 23 during the reverse rinsing mode. This provides a reliable spinning of the impeller 23 during the reverse rinsing mode.

The reverse rinsing filter 10 is characterized by a reduced internal leakage during backwashing mode via the valve 34. This further improves the reliable spinning of the impeller 23 during the reverse rinsing mode.

The bearing rings 39a, 39b further improve the spinning of the impeller 23 during the reverse rinsing mode. The bearing rings 39a, 39b are positioned close the rotation axis 36 of the impeller 23.

The nozzles 33 are positioned on the or each outer tube 31 away from the rotation axis 36. This further improves the reliable spinning of the impeller 23 during the reverse rinsing mode.

### List of reference signs

- 10: reverse rinsing filter
- 11: housing
- 11a: connection section
- 11b: filter-bowl section
- 12: inlet chamber
- 12a: sub-chamber
- 12b: sub-chamber
- 13: outlet chamber
- 14: inlet opening
- 15: outlet opening
- 16: inlet flange
- 17: outlet flange
- 18: discharge chamber
- 19: discharge opening
- 20: discharge valve
- 21: filter insert
- 22: filter sieve
- 22a: lower filter sieve section
- 22b: upper filter sieve section
- 23: impeller
- 23': impeller
- 23": impeller
- 24: interior chamber
- 24a: lower sub-chamber
- 24b: upper sub-chamber
- 25: protrusion
- 26: bottom wall
- 27: wall section
- 28: protrusion
- 29: dividing wall
- 30: central tube
- 31: outer tube
- 32: connecting tube
- 33: nozzles
- 34: valve
- 35: protrusion
- 36: axis
- 37: axis
- 38: axis
- 39a: bearing
- 39b: bearing
- 40: deflector element
- 41: opening
- 42: flap
- 43: radial outer circular edge
- 44: opening
- 45: radial inner circular edge
- 46: fixing ring
- 47: mounting element
- 48: mounting opening
- 49: mounting opening
- 50: return spring
- 51: mounting rod
- 52: spring cup
- 53: screw
- 54: centering element
- 55: wall section
- 56: O-ring

## Claims

1. Reverse rinsing filter (10),
having a housing (11), the housing (11) provides an inlet chamber (12) being in communication with an inlet opening (14) for liquid medium to be filtered, an outlet chamber (13) being in communication with an outlet opening (15) for filtered liquid medium, and a discharge chamber (18) being in communication with a discharge opening (19), wherein in a so-called filtration mode of the reverse rinsing filter (10) said discharge opening (19) is closed by a discharge valve (20) assigned to the discharge opening (19), and wherein in a so-called reverse rinsing mode of the reverse rinsing filter (10) said discharge opening (19) is opened by the discharge valve (20),
having a filter insert (21) positioned within the housing (11), wherein the filter insert comprises a filter sieve (22) with a lower filter sieve section (22a) and an upper filter sieve section (22b) and further comprises an impeller (23) positioned within an interior chamber (24) of the filter insert (21),
wherein in the filtration mode of the reverse rinsing filter (10), when the discharge valve (20) is closed, the filter insert (21) is in a first relative position within the housing (11) such that the upper filter sieve section (22b) is blocked and the lower filter sieve section (22a) is unblocked so that the lower filter sieve section (22a) can filter liquid medium that flows from the inlet chamber (12) through the lower filter sieve section (22a) into the interior chamber (24) of the filter insert (21) and then from the interior chamber (24) of the filter insert (21) into the outlet chamber (13),
wherein in the reverse rinsing mode of the reverse rinsing filter (10), when the discharge valve (20) is opened, the filter insert (21) is in a second relative position within the housing (11) such that the upper filter sieve section (22b) and the lower filter sieve section (22a) are both unblocked so that liquid medium flows from the inlet chamber (12) through the upper filter sieve section (22b) into the interior chamber (24) of the filter insert (21) and then from the interior chamber (24) of the filter insert (21) through the lower filter sieve section (22a) into the inlet chamber (12) and then to the discharge chamber (18),
**characterized in that**
the filter insert (21) comprises a dividing wall (29) running in radial direction of the filter insert (21), wherein the diving wall (29) separates the interior chamber (24) of the filter insert (21) into an upper sub-chamber (24b) and a lower sub-chamber (24a), wherein the dividing wall (29) comprises openings (41), wherein the upper sub-chamber (24b) is in the reverse rinsing mode in communication with the inlet chamber (12) through the upper filter sieve section (22b), wherein the lower sub-chamber (24a) is in the reverse rinsing mode and in the filtration mode in communication with the inlet chamber (12) through the lower filter sieve section (22a), and wherein the impeller (23) is positioned inside the lower sub-chamber (24a) of the interior chamber (24),
the impeller (23) of the filter insert (21) comprises a central tube (30) and at least one outer tube (31), wherein the central tube (30) is in communication with the upper sub-chamber (24b) of the interior chamber (24) and with the or each outer tube (31), and wherein the or each outer tube (31) comprises nozzles (33),
the filter insert (21) comprises a valve (34) assigned to said dividing wall (29), wherein in the filtration mode of the reverse rinsing filter said openings (41) of the dividing wall (29) are opened by said valve (34) being opened thereby allowing the liquid medium flowing though the lower filter sieve section (22a) into the lower sub-chamber (24a) of the interior chamber (24) and flowing around the tubes (30, 31, 32) of the impeller (23) to flow from the lower sub-chamber (24a) of the interior chamber (24) into the upper sub-chamber (24b), and wherein in the reverse rinsing mode of the reverse rinsing filter (10) said openings (41) of the dividing wall (29) are closed by said valve (34) being closed thereby allowing the liquid medium flowing though the upper filter sieve section (22b) into the upper sub-chamber (24b) of the interior chamber (24) to flow from the upper sub-chamber (24b) into the tubes (30, 31) of the impeller (23) and then through the nozzles (33) of the or each outer tube (31) of the impeller (23) to the lower filter sieve section (22a),
the valve (34) is provided by a flap valve having a flap (42) made from an elastomer material, wherein the in the reverse rinsing mode of the reverse rinsing filter the flap (42) of said flap valve runs parallel to the dividing wall (29), and wherein in the filtration mode of the reverse rinsing filter the flap (42) of said flap valve is lifted up from the dividing wall (29) and oscillates in the flow of filtered liquid medium.

2. Reverse rinsing filter as claimed in claim 1, **characterized in that** in the reverse rinsing mode of the reverse rinsing filter (10) the central tube (30) of the impeller (23) and thereby the entire impeller (23) rotates around the longitudinal axis (36) of the filter insert (21), wherein the axis (37) of the or each outer tube (31) of the impeller (23) runs parallel to said longitudinal axis (36) of the filter insert (21).

3. Reverse rinsing filter as claimed in claim 1 or 2, **characterized in that** the or each outer tube (31) of the impeller (23) is in communication with the central tube (30) of the impeller (23) through at least one connecting tube (32) of the impeller (23).

4. Reverse rinsing filter as claimed in claim 3, **characterized in that** the or each connecting tube (32) of the impeller (23) runs perpendicular to the central tube (30) and the respective outer tube (31).

5. Reverse rinsing filter as claimed in one of claims 1 to 4, **characterized in that** the or each outer tube (31) of the impeller (23) comprises at least one deflector element (40) positioned in the region of the nozzles (33) of the respective outer tube (31).

6. Reverse rinsing filter as claimed in one of claims 1 to 5, **characterized in that** the central tube (30) of the impeller (23) is guided by bearings (39a, 39b).

7. Reverse rinsing filter as claimed in one of claims 1-6, **characterized in that** the flap (42) of the flap valve is provided by a disc-shaped workpiece made from an elastomer material, wherein said flap (42) comprises a radial outer circular edge (43) and a radial inner opening (44) with a radial inner circular edge (45), wherein an upper section of the central tube (30) of the impeller (23) passes though said opening (44).

8. Reverse rinsing filter as claimed in one of claims 1 to 7, **characterized in that** the flap (42) is mounted to the dividing wall (29) by an annular fixing ring (46) and mounting elements (47), namely to a side of the dividing wall (29) facing towards the upper sub-chamber (24b) of the interior chamber (24) of the filter insert (21) so that the in the filtration mode of the reverse rinsing filter said flap (42) oscillates in the flow of filtered liquid medium within the upper sub-chamber (24b) of the interior chamber (24).

9. Reverse rinsing filter as claimed in claims 6 and 8, **characterized in that** one of the bearings (39a) which guides the central tube (30) of the impeller (23) is mounted to the dividing wall (29) and positioned between the central tube (30) of the impeller (23) and the fixing ring (46) of the flap valve, namely between the upper section of the central tube (32) passing through the opening of the flap (42) and the fixing ring (46).

10. Reverse rinsing filter as claimed in claim 9, **characterized in that** the other bearing (39b) which guides the central tube (30) of the impeller (23) is mounted to a bottom wall (26) and/or to a mounting rod (51) of the filter insert (21), wherein said bottom wall (26) carries the filter sieve (22) and the tube impeller (23) on the upper side of the same.

## Patentansprüche

1. Rückspülfilter (10),
aufweisend ein Gehäuse (11), wobei das Gehäuse (11) eine Einlasskammer (12), die in Verbindung mit einer Einlassöffnung (14) für ein zu filterndes flüssiges Medium steht, eine Auslasskammer (13), die in Verbindung mit einer Auslassöffnung (15) für ein gefiltertes flüssiges Medium steht, und eine Abflusskammer (18), die in Verbindung mit einer Abflussöffnung (19) steht, bereitstellt, wobei die Abflussöffnung (19) in einem so genannten Filtriermodus des Rückspülfilters (10) durch ein Abflussventil (20) geschlossen wird, das der Abflussöffnung (19) zugeordnet ist, und wobei die Abflussöffnung (19) in einem so genannten Rückspülmodus des Rückspülfilters (10) durch das Abflussventil (20) geöffnet wird,
aufweisend ein in dem Gehäuse (11) positioniertes Filterelement (21), wobei das Filterelement ein Filtersieb (22) mit einem unteren Filtersiebabschnitt (22a) und einem oberen Filtersiebabschnitt (22b) umfasst und ferner ein Laufrad (23) umfasst, das in einer Innenkammer (24) des Filterelements (21) positioniert ist,
wobei sich das Filterelement (21) in dem Filtriermodus des Rückspülfilters (10), in dem das Abflussventil (20) geschlossen ist, auf eine solche Weise in einer ersten relativen Position in dem Gehäuse (11) befindet, dass der obere Filtersiebabschnitt (22b) blockiert ist und der untere Filtersiebabschnitt (22a) nicht blockiert ist, so dass der untere Filtersiebabschnitt (22a) ein flüssiges Medium, das von der Einlasskammer (12) durch den unteren Filtersiebabschnitt (22a) in die Innenkammer (24) des Filterelements (21) und dann von der Innenkammer (24) des Filterelements (21) in die Auslasskammer (13) strömt, filtern kann,
wobei sich das Filterelement (21) in dem Rückspülmodus des Rückspülfilters (10), in dem das Abflussventil (20) geöffnet ist, auf eine solche Weise in einer zweiten relativen Position in dem Gehäuse (11) befindet, dass der obere Filtersiebabschnitt (22b) und der untere Filtersiebabschnitt (22a) beide nicht blockiert sind, so dass ein flüssiges Medium von der Einlasskammer (12) durch den oberen Filtersiebabschnitt (22b) in die Innenkammer (24) des Filterelements (21) und dann von der Innenkammer (24) des Filterelements (21) durch den unteren Filtersiebabschnitt (22a) in die Einlasskammer (12) und dann zu der Abflusskammer (18) strömt,
**dadurch gekennzeichnet, dass**
das Filterelement (21) eine Trennwand (29) umfasst, die in radialer Richtung des Filterelements (21) verläuft, wobei die Trennwand (29) die Innenkammer (24) des Filterelements (21) in eine obere Teilkammer (24b) und eine untere Teilkammer (24a) trennt, wobei die Trennwand (29) Öffnungen (41) umfasst, wobei die obere Teilkammer (24b) in dem Rückspülmodus durch den oberen Filtersiebabschnitt (22b) in Verbindung mit der Einlasskammer (12) steht, wobei die untere Teilkammer (24a) in dem Rückspülmodus und in dem Filtriermodus durch den unteren Filtersiebabschnitt (22a) in Verbindung mit der Einlasskammer (12) steht, und wobei das Laufrad (23) in der unteren Teilkammer (24a) der Innenkammer (24) positioniert ist,
das Laufrad (23) des Filterelements (21) ein mittleres Rohr (30) und wenigstens ein äußeres Rohr (31) umfasst, wobei das mittlere Rohr (30) in Verbindung mit der oberen Teilkammer (24b) der Innenkammer (24) und mit dem oder jedem äußeren Rohr (31) steht und wobei das oder jedes äußere Rohr (31) Düsen (33) umfasst,
das Filterelement (21) ein Ventil (34) umfasst, das der Trennwand (29) zugeordnet ist, wobei die Öffnungen (41) der Trennwand (29) in dem Filtriermodus des Rückspülfilters dadurch geöffnet werden, dass das Ventil (34) geöffnet wird, wodurch ermöglicht wird, dass das flüssige Medium durch den unteren Filtersiebabschnitt (22a) in die untere Teilkammer (24a) der Innenkammer (24) strömt und um die Rohre (30, 31, 32) des Laufrads (23) strömt, um von der unteren Teilkammer (24a) der Innenkammer (24) in die obere Teilkammer (24b) zu strömen, und wobei die Öffnungen (41) der Trennwand (29) in dem Rückspülmodus des Rückspülfilters (10) dadurch geschlossen werden, dass das Ventil (34) geschlossen wird, wodurch ermöglicht wird, dass das flüssige Medium durch den oberen Filtersiebabschnitt (22b) in die obere Teilkammer (24b) der Innenkammer (24) strömt, um von der oberen Teilkammer (24b) in die Rohre (30, 31) des Laufrads (23) und dann durch die Düsen (33) des oder jedes äußeren Rohrs (31) des Laufrads (23) zu dem unteren Filtersiebabschnitt (22a) zu strömen,
das Ventil (34) durch ein Klappenventil bereitgestellt ist, das eine Klappe (42) aufweist, die aus einem Elastomermaterial hergestellt ist, wobei die Klappe (42) des Klappenventils in dem Rückspülmodus des Rückspülfilters parallel zu der Trennwand (29) verläuft und wobei die Klappe (42) des Klappenventils in dem Filtriermodus des Rückspülfilters von der Trennwand (29) nach oben abgehoben wird und in dem Strom des gefilterten flüssigen Mediums schwingt.

2. Rückspülfilter nach Anspruch 1, **dadurch gekennzeichnet, dass** sich das mittlere Rohr (30) des Laufrads (23) und dadurch das gesamte Laufrad (23) in dem Rückspülmodus des Rückspülfilters (10) um die Längsachse (36) des Filterelements (21) drehen, wobei die Achse (37) des oder jedes äußeren Rohrs (31) des Laufrads (23) parallel zu der Längsachse (36) des Filterelements (21) verläuft.

3. Rückspülfilter nach Anspruch 1 oder 2, **dadurch gekennzeichnet, dass** das oder jedes äußere Rohr (31) des Laufrads (23) durch wenigstens ein Verbindungsrohr (32) des Laufrads (23) in Verbindung mit dem mittleren Rohr (30) des Laufrads (23) steht.

4. Rückspülfilter nach Anspruch 3, **dadurch gekennzeichnet, dass** das oder jedes Verbindungsrohr (32) des Laufrads (23) senkrecht zu dem mittleren Rohr (30) und dem entsprechenden äußeren Rohr (31) verläuft.

5. Rückspülfilter nach einem der Ansprüche 1 bis 4, **dadurch gekennzeichnet, dass** das oder jedes äußere Rohr (31) des Laufrads (23) wenigstens ein Ablenkelement (40) umfasst, das in dem Bereich der Düsen (33) des entsprechenden äußeren Rohrs (31) positioniert ist.

6. Rückspülfilter nach einem der Ansprüche 1 bis 5, **dadurch gekennzeichnet, dass** das mittlere Rohr (30) des Laufrads (23) durch Lager (39a, 39b) geführt ist.

7. Rückspülfilter nach einem der Ansprüche 1 bis 6, **dadurch gekennzeichnet, dass** die Klappe (42) des Klappenventils durch ein scheibenförmiges Werkstück bereitgestellt ist, das aus einem Elastomermaterial hergestellt ist, wobei die Klappe (42) eine radiale kreisförmige Außenkante (43) und eine radiale innere Öffnung (44) mit einer radialen kreisförmigen Innenkante (45) umfasst, wobei ein oberer Abschnitt des mittleren Rohrs (30) des Laufrads (23) durch die Öffnung (44) führt.

8. Rückspülfilter nach einem der Ansprüche 1 bis 7, **dadurch gekennzeichnet, dass** die Klappe (42) durch einen ringförmigen Befestigungsring (46) und Befestigungselemente (47) an der Trennwand (29), nämlich an einer Seite der Trennwand (29), die der oberen Teilkammer (24b) der Innenkammer (24) des Filterelements (21) zugewandt ist, befestigt ist, so dass die Klappe (42) in dem Filtriermodus des Rückspülfilters in dem Strom des gefilterten flüssigen Mediums in der oberen Teilkammer (24b) der Innenkammer (24) schwingt.

9. Rückspülfilter nach den Ansprüchen 6 und 8, **dadurch gekennzeichnet, dass** eines der Lager (39a), das das mittlere Rohr (30) des Laufrads (23) führt, an der Trennwand (29) befestigt und zwischen dem mittleren Rohr (30) des Laufrads (23) und dem Befestigungsring (46) des Klappenventils, nämlich zwischen dem oberen Abschnitt des mittleren Rohrs (32), das durch die Öffnung der Klappe (42) führt, und dem Befestigungsring (46), positioniert ist.

10. Rückspülfilter nach Anspruch 9, **dadurch gekennzeichnet, dass** das andere Lager (39b), das das mittlere Rohr (30) des Laufrads (23) führt, an einer Bodenwand (26) und/oder an einer Befestigungsstange (51) des Filterelements (21) befestigt ist, wobei die Bodenwand (26) das Filtersieb (22) und das Rohrlaufrad (23) auf der Oberseite desselben trägt.

## Revendications

1. Filtre de lavage à contre-courant (10),
comportant un boîtier (11), le boîtier (11) présente une chambre d'entrée (12) qui est en communication avec une ouverture d'entrée (14) pour le milieu liquide à filtrer, une chambre de sortie (13) qui est en communication avec une ouverture de sortie (15) pour le milieu liquide filtré, et une chambre de décharge (18) qui est en communication avec une ouverture de décharge (19), dans lequel, dans un mode dit de filtration du filtre de lavage à contre-courant (10), ladite ouverture de décharge (19) est fermée par une soupape de décharge (20) associée à l'ouverture de décharge (19), et dans lequel, dans un mode dit de lavage à contre-courant du filtre de lavage à contre-courant (10), ladite ouverture de décharge (19) est ouverte par la soupape de décharge (20),
comportant une cartouche filtrante (21) positionnée à l'intérieur du boîtier (11), la cartouche filtrante comprenant un tamis filtrant (22) avec une section inférieure de tamis filtrant (22a) et une section supérieure de tamis filtrant (22b) et comprenant en outre une roue (23) positionnée à l'intérieur d'une chambre intérieure (24) de la cartouche filtrante (21),
dans lequel, dans le mode de filtration du filtre de lavage à contre-courant (10), lorsque la soupape de décharge (20) est fermée, la cartouche filtrante (21) est dans une première position relative à l'intérieur du boîtier (11) de telle sorte que la section supérieure de tamis filtrant (22b) est bloquée et la section inférieure de tamis filtrant (22a) est débloquée de telle sorte que la section inférieure de tamis filtrant (22a) peut filtrer le milieu liquide qui coule depuis la chambre d'entrée (12), à travers la section inférieure de tamis filtrant (22a), vers la chambre intérieure (24) de la cartouche filtrante (21), puis depuis la chambre intérieure (24) de la cartouche filtrante (21) vers la chambre de sortie (13),
dans lequel, dans le mode de lavage à contre-courant du filtre de lavage à contre-courant (10), lorsque la soupape de décharge (20) est ouverte, la cartouche filtrante (21) est dans une seconde position relative à l'intérieur du boîtier (11) de telle sorte que la section supérieure de tamis filtrant (22b) et la section inférieure de tamis filtrant (22a) sont toutes deux débloquées de telle sorte que le milieu liquide s'écoule depuis la chambre d'entrée (12), à travers la section supérieure de tamis filtrant (22b), vers la chambre intérieure (24) de la cartouche filtrante (21), puis depuis la chambre intérieure (24) de la cartouche filtrante (21), à travers la partie inférieure de tamis filtrant (22a), vers la chambre d'entrée (12) et ensuite vers la chambre de décharge (18),
**caractérisé en ce que**
la cartouche filtrante (21) comprend une paroi de séparation (29) s'étendant dans la direction radiale de la cartouche filtrante (21), la paroi de séparation (29) séparant la chambre intérieure (24) de la cartouche filtrante (21) en une chambre secondaire supérieure (24b) et une chambre secondaire inférieure (24a), la paroi de séparation (29) comprenant des ouvertures (41), la chambre secondaire supérieure (24b) étant en mode de lavage à contre-courant en communication avec la chambre d'entrée (12) à travers la section supérieure de tamis filtrant (22b), la chambre secondaire inférieure (24a) étant en mode de lavage à contre-courant et en mode de filtration en communication avec la chambre d'entrée (12) à travers la section inférieure de tamis filtrant (22a), et la roue (23) étant placée dans la chambre secondaire inférieure (24a) de la chambre intérieure (24),
la roue (23) de la cartouche filtrante (21) comprend un tube central (30) et au moins un tube extérieur (31), le tube central (30) étant en communication avec la chambre secondaire supérieure (24b) de la chambre intérieure (24) et avec le ou chaque tube extérieur (31), et le ou chaque tube extérieur (31) comprenant des buses (33),
la cartouche filtrante (21) comprend une soupape (34) associée à ladite paroi de séparation (29), dans lequel, dans le mode de filtration du filtre de lavage à contre-courant, lesdites ouvertures (41) de la paroi de séparation (29) sont ouvertes par ladite soupape (34) étant ouverte permettant ainsi au milieu liquide s'écoulant à travers la section inférieure de tamis filtrant (22a) vers la chambre secondaire inférieure (24a) de la chambre intérieure (24) et s'écoulant autour des tubes (30, 31, 32) de la roue (23) de s'écouler depuis la chambre secondaire inférieure (24a) de la chambre intérieure (24) vers la chambre secondaire supérieure (24b), et dans lequel, dans le mode de lavage à contre-courant du filtre de lavage à contre-courant (10), lesdites ouvertures (41) de la paroi de séparation (29) sont fermées par ladite soupape (34) étant fermée permettant ainsi au milieu liquide s'écoulant à travers la section supérieure de tamis filtrant (22b) vers la chambre secondaire supérieure (24b) de la chambre intérieure (24), de s'écouler depuis la chambre secondaire supérieure (24b) dans les tubes (30, 31) de la roue (23), puis à travers les buses (33) depuis le ou chaque tube extérieur (31) de la roue (23) vers la section inférieure de tamis filtrant (22a),
la soupape (34) est fournie par une soupape à clapet ayant un clapet (42) fabriqué à partir d'un matériau élastomère, dans lequel, dans le mode de lavage à contre-courant du filtre de lavage à contre-courant, le clapet (42) de ladite soupape à clapet s'étend parallèlement à la paroi de séparation (29), et dans lequel dans le mode de filtration du filtre de lavage à contre-courant, le clapet (42) de ladite soupape à clapet est soulevé de la paroi de séparation (29) et oscille dans l'écoulement du milieu liquide filtré.

2. Filtre de lavage à contre-courant selon la revendication 1, **caractérisé en ce que**, dans le mode de lavage à contre-courant du filtre à lavage à contre-courant (10), le tube central (30) de la roue (23) et donc la roue (23) entière tourne autour de l'axe longitudinal (36) de la cartouche filtrante (21), l'axe (37) du ou de chaque tube extérieur (31) de la roue (23) étant parallèle audit axe longitudinal (36) de la cartouche filtrante (21).

3. Filtre de lavage à contre-courant selon la revendication 1 ou 2, **caractérisé en ce que** le ou chaque tube extérieur (31) de la roue (23) est en communication avec le tube central (30) de la roue (23) par au moins un tube de raccordement (32) de la roue (23).

4. Filtre de lavage à contre-courant selon la revendication 3, **caractérisé en ce que** le ou chaque tube de raccordement (32) de la roue (23) est perpendiculaire au tube central (30) et au tube extérieur (31) correspondant.

5. Filtre de lavage à contre-courant selon l'une des revendications 1 à 4, **caractérisé en ce que** le ou chaque tube extérieur (31) de la roue (23) comprend au moins un élément déflecteur (40) placé dans la zone des buses (33) du tube extérieur (31) correspondant.

6. Filtre de lavage à contre-courant selon l'une des revendications 1 à 5, **caractérisé en ce que** le tube central (30) de la roue (23) est guidé par des paliers (39a, 39b).

7. Filtre de lavage à contre-courant selon l'une des revendications 1 à 6, **caractérisé en ce que** le clapet (42) de la soupape à clapet est pourvu d'une pièce en forme de disque en matériau élastomère, ledit clapet (42) comprenant un bord circulaire extérieur radial (43) et une ouverture intérieure radiale (44) avec un bord circulaire intérieur radial (45), une section supérieure du tube central (30) du rotor (23) passant par ladite ouverture (44).

8. Filtre de lavage à contre-courant selon l'une des revendications 1 à 7, **caractérisé en ce que** le clapet (42) est monté sur la paroi de séparation (29) par une bague de fixation annulaire (46) et des éléments de fixation (47), notamment sur un côté de la paroi de séparation (29) tourné vers la chambre secondaire supérieure (24b) de la chambre intérieure (24) de la cartouche filtrante (21) de telle sorte que, dans le mode de filtration du filtre de lavage à contre-courant, ledit clapet (42) oscille dans l'écoulement du milieu liquide filtré dans la chambre secondaire supérieure (24b) de la chambre intérieure (24).

9. Filtre de lavage à contre-courant selon les revendications 6 et 8, **caractérisé en ce que** l'un des paliers (39a) guidant le tube central (30) de la roue (23) est monté sur la paroi de séparation (29) et positionné entre le tube central (30) de la roue (23) et la bague de fixation (46) du clapet, notamment entre la section supérieure du tube central (32) passant par l'ouverture du clapet (42) et la bague de fixation (46).

10. Filtre de lavage à contre-courant selon la revendication 9, **caractérisé en ce que** l'autre palier (39b) guidant le tube central (30) de la roue (23) est monté sur une paroi inférieure (26) et/ou sur une tige de montage (51) de la cartouche filtrante (21), ladite paroi inférieure (26) portant le tamis filtrant (22) et la roue (23) à tube sur son côté supérieur.
